# EUROPÄISCHE PATENTANMELDUNG

(11) **EP 3 115 856 A1**
(43) Veröffentlichungstag der Anmeldung: **11.01.2017**
(21) Anmeldenummer: 15176105.3
(22) Anmeldetag: 09.07.2015
(51) Int. Cl.: G05B 19/4061, B25J 9/16

(54) **TRAJEKTORIENBESTIMMUNGSVERFAHREN FÜR NEBENZEITBEWEGUNGEN**

(71) Anmelder: Siemens Aktiengesellschaft, 80333 München (DE)
(72) Erfinder: Bretschneider, Jochen, 73732 Esslingen (DE); Linke, Hartmut, 91056 Erlangen (DE)

(57) **Zusammenfassung**

Die Erfindung betrifft ein Verfahren (100) zur Steuerung einer Nebenzeitbewegung (16) eines Werkzeugs (10) von einer Startposition (12) zu einer Endposition (14) in einem Verfahrbereich (22) einer Werkzeugmaschine (50). Das Verfahren (100) umfasst einen Schritt in dem ein Bereitstellen einer kollisionsfreien ersten Trajektorie (30) für die Nebenzeitbewegung (16) erfolgt. In einem darauffolgenden Schritt wird eine zweite Trajektorie (40) mittels eines Algorithmus (48) ermittelt. Die zweite Trajektorie (40) ist dabei in mindestens einem wählbaren Zielparameter gegenüber der ersten Trajektorie (30) verbessert. In einem anschließenden Schritt erfolgt ein Prüfen der Kollisionsfreiheit der zweiten Trajektorie (40) und Ermitteln mindestens eines mit der zweiten Trajektorie (40) korrespondierenden Befehls, wenn für die zweite Trajektorie (40) Kollisionsfreiheit vorliegt. Erfindungsgemäß umfasst die zweite Trajektorie (40) einen Polynomabschnitt (42).

## Beschreibung

Die Erfindung betrifft ein Verfahren zur Bestimmung einer Trajektorie für eine Nebenzeitbewegung einer Werkzeugmaschine, sowie ein dazu geeignetes Programm und eine zugehörige Steuereinheit für die Werkzeugmaschine.

Aus der DE 103 43 611 A1 ist ein Verfahren zur Maschinensteuerung bekannt, bei dem ein Arbeitsraum in diskrete Elemente eingeteilt wird. Für jedes diskrete Element wird ein binärer Kollisionsparameter für ein Werkzeug bereitgestellt. Wenn ein Werkzeug bei einer Bewegung ein diskretes Element durchfährt, wird eine Kollisionsgefahr anhand einer Look-up-Tabelle erkannt. Ferner wird das Werkzeug selbst auch durch ein diskretisiertes Modell abgebildet.

Ein Nachteil bekannter Maschinensteuerungsverfahren besteht darin, dass diese auf einem umfangreichen Datensatz über die Umgebung des Werkzeugs beruhen, dessen Bereitstellung und Verarbeitung im Betrieb der Maschine hohe Rechenleistung erfordert. Ferner basieren die Verfahren nach dem Stand der Technik darauf, dass der Weg für die angestrebte Bewegung vollständig von einem Algorithmus bereitgestellt werden muss, der sich durch häufige Iteration einem lediglich scheinbaren Optimum annähert. Auch hierdurch wird bei den bekannten Verfahren der Bedarf an Rechenleistung erhöht.

Der Erfindung liegt die Aufgabe zugrunde, eine Möglichkeit zur Bestimmung einer Trajektorie einer Nebenzeitbewegung zur Verfügung zu stellen, die die Nachteile aus dem Stand der Technik überwindet. Es sind ein Verfahren und Mittel zu dessen Durchführung bereitzustellen, die es erlauben, bei geringem Rechenaufwand zuverlässig eine optimierte Nebenzeitbewegung durchzuführen.

Die Aufgabenstellung wird durch das erfindungsgemäße Verfahren gelöst. Im erfindungsgemäßen Verfahren erfolgt die Nebenzeitbewegung eines Werkzeugs von einer durch einen Benutzer wählbaren Startposition in eine Endposition, die auch vom Benutzer auswählbar ist oder durch ein CAM-System gegeben sind. Dabei wird zunächst eine kollisionsfreie erste Trajektorie für die Nebenzeitbewegung zur Verfügung gestellt. Die kollisionsfreie erste Trajektorie weist keine Optimierung auf einen weitergehenden Parameter, wie beispielsweise einen minimalen Zeitbedarf oder minimalen Energiebedarf der Nebenzeitbewegung, auf. In einem weiteren Verfahrensschritt wird mittels eines Algorithmus eine zweite Trajektorie ermittelt, die gegenüber der ersten Trajektorie im Hinblick auf einen wählbaren Zielparameter verbessert ist. Der Algorithmus nutzt dabei die Startposition, die Zielposition und die vorhandene erste Trajektorie als Eingabe zur Ermittlung der zweiten Trajektorie. Die zweite Trajektorie stellt im Wesentlichen eine Modifikation der ersten Trajektorie dar.

In einem anschließenden Verfahrensschritt wird für die zweite Trajektorie deren Kollisionsfreiheit geprüft. Wenn für die zweite Trajektorie Kollisionsfreiheit vorliegt, wird mindestens ein Befehl ermittelt, der mit der zweiten Trajektorie korrespondiert. Der mindestens eine Befehl ist in einer Steuereinheit der Werkzeugmaschine speicherbar und ist an die Antriebsmittel des Werkzeugs weiterleitbar. Der mindestens eine Befehl ist dazu geeignet, das Werkzeug zum Abfahren der zweiten Trajektorie zu bringen. Erfindungsgemäß umfasst die zweite Trajektorie mindestens einen Polynomabschnitt. Der Polynomabschnitt weist eine Form auf, die mathematisch durch ein Polynom beschreibbar ist.

Das erfindungsgemäße Verfahren erlaubt es, in zuverlässiger Weise eine optimierte zweite Trajektorie und einen korrespondierenden Befehlssatz für eine optimierte Nebenzeitbewegung zu ermitteln. Das beanspruchte Verfahren nutzt die Startposition und die Endposition der Nebenzeitbewegung, die ohnehin bekannt sind. Die erste Trajektorie dient ebenfalls als Eingabe für den Algorithmus und kann beispielweise manuell durch den Benutzer vorgegeben werden. Die erste Trajektorie erfordert keine Optimierung im Hinblick auf einen Zielparameter und kann entsprechend zeitsparend ermittelt werden. Alternativ kann auch ein einfaches Wegfindungsverfahren eingesetzt werden, das darauf ausgelegt ist, bei einer Bewegung stets einen gleich großen Abstand quer zur Bewegungsrichtung zu den Begrenzungen des Verfahrbereichs zu suchen. Insgesamt ist der Algorithmus im erfindungsgemäßen Verfahren dazu geeignet, aus einer weitestgehend unpräzisen vorgegebenen ersten Trajektorie eine optimierte zweite Trajektorie zu ermitteln. Hierdurch wird beispielweise eine Nebenzeitbewegung mit einem Minimum an Zeitbedarf durchgeführt. Das erfindungsgemäße Verfahren stellt niedrige Anforderungen an die notwendige Rechenleistung und kann auf entsprechend einfacher Hardware durchgeführt werden. Ebenso kann das erfindungsgemäße Verfahren im Rahmen einer Modifikation auch auf einer vorhandenen Werkzeugmaschine mit wenig Rechenleistung implementiert werden. Die geringen Anforderungen an die Rechenleistung erlauben es ferner, das erfindungsgemäße Verfahren in Echtzeit ablaufen zu lassen.

In einer bevorzugten Ausführungsform der Erfindung umfasst die erste Trajektorie eine Mehrzahl an geradlinigenAbschnitten. Zusammengesetzte geradlinige Abschnitte, die zu einer kollisionsfreien Trajektorie führen, können schnell erkannt und ermittelt werden. Darüber hinaus können geradlinige Abschnitte durch eine niedrige Anzahl an Befehlen der Steuereinheit der Werkzeugmaschine speicherplatzsparend bereitgestellt werden.

Im erfindungsgemäßen Verfahren können die oben beschriebenen Verfahrensschritte wiederholt werden, wenn beim Prüfen der zweiten Trajektorie eine Kollision erkannt wird, also keine Kollisionsfreiheit vorliegt. Bei einem erneuten Durchlauf des Verfahrensschritts, in dem die im Hinblick auf den mindestens einen wählbaren Zielparameter verbesserten zweiten Trajektorie ermittelt wird, wird dem Algorithmus ein modifiziertes Modell des Verfahrbereichs zur Verfügung gestellt. Das Modell des Verfahrbereichs umfasst die Punkte und Flächen des Werkstücks, des Spannzeugs, eines Werkzeugtisches und Wandungen der Werkzeugmaschine, die den vom Werkzeug erreichbaren Verfahrbereich eingrenzen und/oder definieren. Das Modell umfasst auch rein geometrische Elemente wie Kontrollebenen und Zielkorridore, die kein körperliches Pendant haben. Die Modifikation des Modells des Verfahrbereichs erfolgt dabei, indem der erreichbare Verfahrbereich verkleinert wird.

Des Weiteren kann im erfindungsgemäßen Verfahren jedes Mal, wenn mittels des Algorithmus eine zweite Trajektorie ermittelt wird, ein Iterationszähler um Eins erhöht werden. Der Iterationszähler erfasst die Anzahl an Durchläufen der Algorithmus-Aufrufe und stellt ein Maß für die beim Ablauf des erfindungsgemäßen Verfahrens verstrichene Zeit dar. Der Iterationszähler ist in Form einer Variablen in einem Programm zum Betrieb einer Steuereinheit der Werkzeugmaschine ausgebildet. Durch ein Überschreiten eines Schwellenwertes durch den Iterationszähler wird erkannt, dass eine maximal hinnehmbare Zeit für das erfindungsgemäße Verfahren verstrichen ist, ohne dass bis dahin eine erwünschte kollisionsfreie optimierte zweite Trajektorie erfolgreich ermittelt ist. In diesem Fall wird mindestens ein Befehl ermittelt, der mit der ersten Trajektorie korrespondiert und an die Werkzeugmaschine ausgegeben. Dies erlaubt es, zu vermeiden, dass das erfindungsgemäße Verfahren dauerhaft in einer Endlosschleife verbleibt, wenn für die vorliegende Aufgabenstellung für den Algorithmus im vorhandenen Verfahrbereich keine angestrebte optimierte zweite Trajektorie existiert. Ein Programm einer Steuereinheit, das sich in einer Endlosschleife befindet, nimmt typischerweise keine weiteren Benutzereingaben entgegen. Dem kann üblicherweise nur mit einem Reset des Systems entgegengewirkt werden. In einem laufenden Produktionsprozess führt ein solcher Reset zu einem vorübergehenden Stillstand des Produktionsprozesses.

Gleichermaßen wird mittels des Iterationszählers die Lösung einer Aufgabenstellung durch den Algorithmus abgebrochen, die übermäßig viel Rechenaufwand erfordert. Inwiefern eine Aufgabenstellung für den Algorithmus effizient lösbar, nur ineffizient lösbar oder gänzlich unlösbar ist, ist im Vorfeld nicht ohne Weiteres vorhersehbar. Das erfindungsgemäße Verfahren gewährleistet damit einen zuverlässigen Betrieb einer Werkzeugmaschine, der gegenüber unvorhergesehenen Komplikationen robust ist. Auf eine aufwendige vorläufige Komplexitätsabschätzung einer Aufgabenstellung kann somit verzichtet werden. Insgesamt werden durch das erfindungsgemäße Verfahren Stillstandszeiten bei einem Produktionsprozess vermieden und die Wirtschaftlichkeit der Werkzeugmaschine gesteigert. Ferner ist der Schwellenwert einstellbar. Bei einer Steuereinheit mit erhöhter Rechenleistung ist ein häufigerer Durchlauf des erfindungsgemäßen Verfahrens hinnehmbar, so dass auch komplexere Aufgabenstellungen durch den Algorithmus gelöst werden können.

In einer weiteren bevorzugten Ausführungsform der Erfindung wird eine Kollision des Werkzeugs erkannt, wenn ein Punkt der zweiten Trajektorie innerhalb einer Hinderniskontur liegt. Zum Werkzeug gehören dabei auch die Werkzeughalterung und damit verbundene Maschinenelemente der Werkzeugmaschine. Die Hinderniskontur umfasst Flächen von Hindernissen im Bereich des Werkstücks, die einen für das Werkzeug unzugänglichen Bereich definieren.

Ferner kann das Ermitteln der zweiten Trajektorie unter Einbeziehung einer Modifikation eines Zielkorridors in einer wählbaren Kontrollebene erfolgen. Die Kontrollebene stellt im Wesentlichen eine während der Nebenzeitbewegung zu durchfahrende Station dar, die im Zielkorridor zu passieren ist. Der Zielkorridor ist ein räumlicher oder flächiger Ausschnitt in der Kontrollebene. Der Verlauf der zweiten Trajektorie ist durch den Algorithmus so zu wählen, dass sämtliche Zielkorridore durchfahren werden. Bei einem erneuten Durchlauf des erfindungsgemäßen Verfahrens kann mindestens ein Zielkorridor modifiziert werden, indem mindestens ein Parameter, der den Zielkorridor definiert, geändert wird. Das ist beispielsweise die Position eines Korridor-Endpunkts. Dadurch ist der Zielkorridor in puncto Größe und Position veränderbar. Das Erfordernis, dass die zweite Trajektorie durch die Zielkorridore zu verlaufen hat, führt dazu, dass bei einem erneuten Durchlauf des Verfahrens die Lage der zweiten Trajektorie verändert wird. Infolgedessen kann eine im vorherigen Durchlauf vorliegende Kollision im späteren Durchlauf überwunden werden. Die Modifikation des Zielkorridors erfolgt dabei in Abhängigkeit von der Position der vorliegenden Kollision. Des Weiteren kann der Zielkorridor als eine einzige zusammenhängende Fläche oder als eine Mehrzahl separater Flächen ausgebildet sein.

Weiter bevorzugt kann durch den Algorithmus mindestens eine dynamische Eigenschaft der Werkzeugmaschine beim Ermitteln der zweiten Trajektorie berücksichtigt werden. Eine maximale Beschleunigung, ein maximaler Ruck, eine maximale Winkelbeschleunigung oder Winkelgeschwindigkeit an einem Gelenk kann eine solche zu berücksichtigende dynamische Eigenschaft sein. Ferner kann auch zur Verringerung von Vibrationsbeanspruchungen der Werkzeugmaschine auch ein zu meidender Geschwindigkeitsbereich entlang einer Bewegungsachse des Werkzeugs eine entsprechende dynamische Eigenschaft sein. Das erfindungsgemäße Verfahren ist damit in einfacher Weise an die bestimmungsgemäßen Betriebsparameter einer Werkzeugmaschine anpassbar. Hierdurch wird z.B. übermäßiger Verschleiß der Werkzeugmaschine vermieden.

In einer weiteren bevorzugten Ausführungsform der Erfindung ist der mindestens eine Befehl, der mit der zweiten Trajektorie korrespondiert, vom Typ G0 oder G1. Im für NC-Maschinen typischen G-Code-System wird durch einen G0-Befehl ein Eilgang des Werkzeugs eingeleitet. G0-Befehle können von heutigen Werkzeugmaschinen ohne Weiteres interpretiert und ausgeführt werden. Das erfindungsgemäße Verfahren stellt für die optimierte zweite Trajektorie damit mindestens einen Befehl in einem maschinen-nativen Format zur Verfügung, das keiner weiteren Umrechnung oder Emulation mehr bedarf. Hierdurch wird der für das erfindungsgemäße Verfahren notwendige Rechenaufwand weiter reduziert.

Ferner kann das erfindungsgemäße Verfahren die erste Trajektorie in Form von mindestens einem Befehl vom Typ G0 in der Steuereinheit der Werkzeugmaschine speichern. Befehle vom Typ G0 oder G1 erlauben es einem Benutzer, in einfacher und übersichtlicher Form eine erste Trajektorie zu erstellen, bei der die Startposition und die Endposition einfach automatisch vom Algorithmus erkannt werden kann. Darüber hinaus erlauben G0-Befehle es dem Benutzer, schnell und sinnfällig die erste Trajektorie kollisionsfrei zu erstellen. Dadurch wird die Handhabung des erfindungsgemäßen Verfahrens vereinfacht.

In einer besonders bevorzugten Ausführungsform der Erfindung ist der mindestens eine wählbare Zielparameter bei der Ermittlung der optimierten zweiten Trajektorie ein Zeitbedarf der Nebenzeitbewegung, der dazu notwendige Energiebedarf, die auftretende Verlustleistung, oder ein Verschleiß des Werkzeugs oder eines Antriebsmittels der Werkzeugmaschine. Alternativ kann auch eine gewichtete Kombination einer Mehrzahl von einzelnen Zielparametern als Optimierungsvorgabe eingesetzt werden. Das erfindungsgemäße Verfahren kann so an eine Vielzahl an Anforderungen oder Kombinationen von Anforderungen angepasst werden. Das beanspruchte Verfahren ist insgesamt flexibel und weist ein breites Einsatzspektrum auf.

Die Erfindung betrifft darüber hinaus ein Programm, das speicherbar ist und mit einem Prozessor ausgeführt werden kann. Das beanspruchte Programm ist dazu ausgebildet, mindestens eines der oben beschriebenen Verfahren in einer Steuereinheit einer Werkzeugmaschine umzusetzen. Das erfindungsgemäße Programm ist plattformunabhängig ausgebildet und kann auf einer Vielzahl an Steuereinheiten für Werkzeugmaschinen aufgespielt werden. Das erfindungsgemäße Programm erfordert lediglich geringe Rechenleistung und ist damit für eine Modifikation einer vorhandenen Werkzeugmaschine geeignet. Der geringe Bedarf an Rechenleistung führt dazu, dass das beanspruchte Programm auf leistungsfähigen Steuereinheiten im Wesentlichen in Echtzeit ausführbar ist.

Die Erfindung betrifft ferner eine Steuereinheit für eine Werkzeugmaschine, die einen Speicher und einen Prozessor umfasst. Diese sind dazu ausgebildet, das oben beschriebene Programm zu speichern und auszuführen. Die erfindungsgemäße Steuereinheit ist kompatibel zu einer Vielzahl an existierenden Werkzeugmaschinen ausgebildet und ist besonders zu deren Modifikation bzw. Aufrüstung geeignet.

Die Erfindung wird im Folgenden anhand einzelner Ausführungsformen in verschiedenen Figuren näher beschrieben. Es zeigt im Einzelnen:
- FIG 1: schematisch einen Ablauf des erfindungsgemäßen Verfahrens in einer ersten Ausführungsform;
- FIG 2: schematisch einen Ausschnitt aus einem Ablauf des erfindungsgemäßen Verfahrens in einer zweiten Ausführungsform;
- FIG 3: ein Ablaufdiagramm einer dritten Ausführungsform des erfindungsgemäßen Verfahrens.

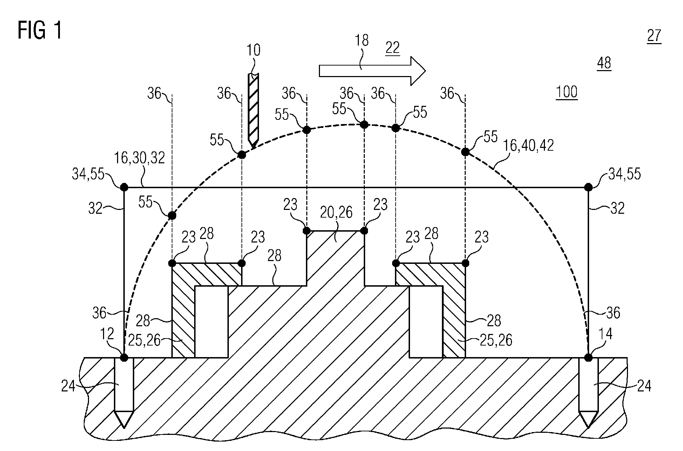

In FIG 1 ist ein Verfahrbereich 22 dargestellt, in dem ein Werkzeug 10 anhand des erfindungsgemäßen Verfahrens 100 eine Nebenzeitbewegung 16 durchführt. Die gezeigte Ausführungsform dient zur Durchführung einer Nebenzeitbewegung eines Werkzeugs 10 in einer Werkzeugmaschine 50. FIG 1 zeigt insgesamt eine zweidimensionale Projektion einer dreidimensionalen Bewegung im Verfahrbereich 22. Im Verfahrbereich 22 ist neben dem Werkzeug 10 ein Werkstück 20 und Spannzeuge 25 angeordnet, die für das Werkzeug 10 jeweils Hindernisse 26 darstellen. Die weitere Befestigung der Spannzeuge 25 ist in FIG 1 nicht näher dargestellt. Die einzelnen Hindernisse 26 weisen jeweils eine Mehrzahl an Außenflächen auf, die im Bereich des Werkstücks 20 insgesamt eine zusammenhängende Hinderniskontur 28 ausbilden. Das Werkstück 20, die Spannzeuge 25 und Ausnehmung 24 weisen an ihrer Oberfläche Kanten 23 auf, die für die zu berücksichtigende Hinderniskontur 28 relevant sind. Die Informationen über die Lage des Werkstücks 20, des Spannzeugs 25, der Hinderniskontur 28 und der Kanten 23 gehören zu einem Modell 27 des Verfahrbereichs 22, das dem in FIG 1 nicht näher dargestellten Algorithmus 48 zugrundeliegt.

FIG 1 zeigt eine erste Trajektorie 30 der Nebenzeitbewegung 16, die von einer Startposition 12 zu einer Zielposition 14 verläuft. Die Startposition 12 und die Zielposition 14 liegen jeweils im Bereich einer Ausnehmung 24. Die erste Trajektorie 30 besteht im Wesentlichen aus geradlinigen Abschnitten 32, an Übergangspunkten 34 miteinander verbunden sind. An den Übergangspunkten 34 erfolgen rapide Richtungsänderungen des Werkzeugs 10, die mit einem erhöhten Verschleiß einhergehen. Insgesamt wird die erste Trajektorie 30 entlang der gleichen Hauptbewegungsrichtung 18 durchgeführt wie die zweite Trajektorie 40.

Die zweite Trajektorie 40 umfasst einen Polynomabschnitt 42, der im Wesentlichen eine stetige Form hat, also frei ist von Knicken. Die zweite Trajektorie 40 wird ausgehend von der ersten Trajektorie 30 und der vorgegebenen Startposition 12 und der Endposition 14 vom Algorithmus 48 ermittelt. Ferner wird im vom beanspruchten Verfahren 100 geprüft, ob an allen Punkten der zweiten Trajektorie 40 Kollisionsfreiheit vorliegt. Ferner erfolgt die Optimierung der Lage der zweiten Trajektorie 40 im Bereich der Punkte 55, die jeweils in den Kontrollebenen 36 liegen, schneiden. Die Kontrollebenen 36 liegen im Wesentlichen senkrecht zur Hauptbewegungsrichtung 18 der Nebenzeitbewegung 16 und erstrecken sich jeweils von einer Kante 23 der Hindernisse 26 aus deren Hinderniskontur 28 in den Verfahrbereich 22. Ferner verläuft die zweite Trajektorie 40 im Bereich der Startposition 12, also der Ausnehmung 24, im Wesentlichen tangential zur ersten Trajektorie 30. Gleichermaßen verläuft die zweite Trajektorie 40 auch im Bereich der Endposition 14, wo sich ebenfalls eine Ausnehmung 24 befindet, im Wesentlichen tangential zur ersten Trajektorie 30. Insgesamt führt die Nebenzeitbewegung 16 das Werkzeug 10 mit einem Minimum von quer zum Polynomabschnitt 42 wirkenden Beschleunigungskräften zeitsparend und kollisionsfrei von der Startposition 12 zur Endposition 14. Neben der Zeitersparnis gegenüber der ersten Trajektorie 30 wird der Verschleiß der Lager und der Antriebe des Werkzeugs 10 reduziert, indem rapide Richtungsänderungen an den Übergangspunkten 34 der ersten Trajektorie 30 vermieden werden.

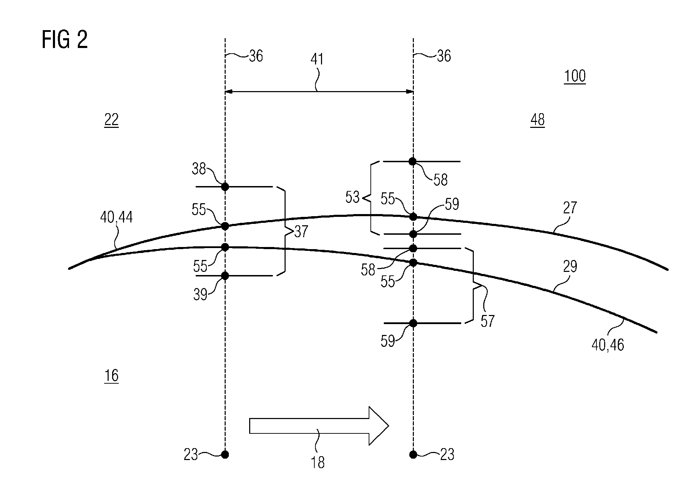

In FIG 2 ist in einem Ausschnitt eine zweite Ausführungsform des erfindungsgemäßen Verfahrens 100 abgebildet, in der der nicht näher dargestellte Algorithmus 48 in mehreren Durchläufen 44, 46 aufgerufen wird. Die gezeigte Ausführungsform dient zur Durchführung einer Nebenzeitbewegung eines Werkzeugs 10 in einer Werkzeugmaschine 50. Das Verfahren 100 wird in einem Verfahrbereich 22 durchgeführt, in dem nicht näher dargestellte Hindernisse 26 mit einer Hinderniskontur 28 und Kanten 23 angeordnet sind. Der Verfahrbereich 22 ist dabei im Wesentlichen wie der Verfahrbereich 22 in FIG. 1 ausgebildet. Beim ersten Durchlauf 44 wird vom Algorithmus 48 eine zweite Trajektorie 40 ermittelt, der ein Modell 27 des Verfahrbereichs 22 mit Kontrollebenen 36 mit Zielkorridoren 37, 53 zugrundeliegt.

Das Verfahren 100 in FIG 2 ist eine zweidimensionale Projektion einer dreidimensionalen Bewegung. Die Kontrollebenen 36 enden jeweils an einer Kante 23, die zu einem Hindernis 26 im Verfahrbereich 22 gehört. In einer Kontrollebene 36 befindet ein erster Zielkorridor 37, der von einem ersten und zweiten Korridor-Endpunkt 38, 39 begrenzt wird. Der Abstand zwischen den Korridor-Endpunkten 38, 39 bestimmt dabei die Größe des ersten Zielkorridors 37. Ein Punkt 55 auf der zweiten Trajektorie 40 aus dem ersten Durchlauf 44 liegt in der zugehörigen Kontrollebene 36 außerhalb des ersten Zielkorridors 37, so dass an der korrespondierenden Stelle Kollisionsfreiheit vorliegt. Auf dem weiteren Weg entlang der Hauptbewegungsrichtung 18 der durchzuführenden Nebenzeitbewegung 16 passiert die zweite Trajektorie 40 aus dem ersten Durchlauf 44 eine weitere Kontrollebene 36 am Punk 55. In der in FIG 2 rechts liegenden Kontrollebene 36 liegt ein zweiter Zielkorridor 53, dessen Größe durch den Abstand der Korridor-Endpunkte 58, 59 definiert ist. Der Punkt 55 der zweiten Trajektorie 40 aus dem ersten Durchlauf 44 liegt in seiner Kontrollebene 36 innerhalb des zweiten Zielkorridors 53. Für die zweite Trajektorie 40 aus dem ersten Durchlauf 44 wird eine Kollision in einem nicht näher dargestellten Abschnitt des Verfahrbereichs 22 ermittelt.

In einem anschließenden zweiten Durchlauf 46 wird dem Algorithmus 48 ein modifiziertes Modell 29 vom Verfahrbereich 22 und seinen Kontrollebenen 36 und Zielkorridoren 37, 57 zugrundegelegt. Der modifizierte zweite Zielkorridor 57 umfasst zwei Korridor-Endpunkte 58, 59, die außerhalb des Zielkorridors 53 liegen, der auf dem Modell 27 des Verfahrbereichs 22 aus dem ersten Durchlauf 44 basiert. Infolgedessen wird im zweiten Durchlauf 46 eine zweite Trajektorie 40 ermittelt, die von der zweiten Trajektorie 40 aus dem ersten Durchlauf 44 in ihrer Lage abweicht. Der Punkt 55 der zweiten Trajektorie 40 liegt auch im zweiten Durchlauf 46 innerhalb des ersten Zielkorridors 37. Ferner liegt der Punkt 55 der zweiten Trajektorie 40 aus dem zweiten Durchlauf 46 in der zugehörigen Kontrollebene 36 innerhalb des modifizierten zweiten Zielkorridors 57. Der erste und zweite Zielkorridor 37, 53 basieren auf dem Modell 27, das die Lage der Kontrollebenen 36 und der Zielkorridore 37, 53 widerspiegelt.

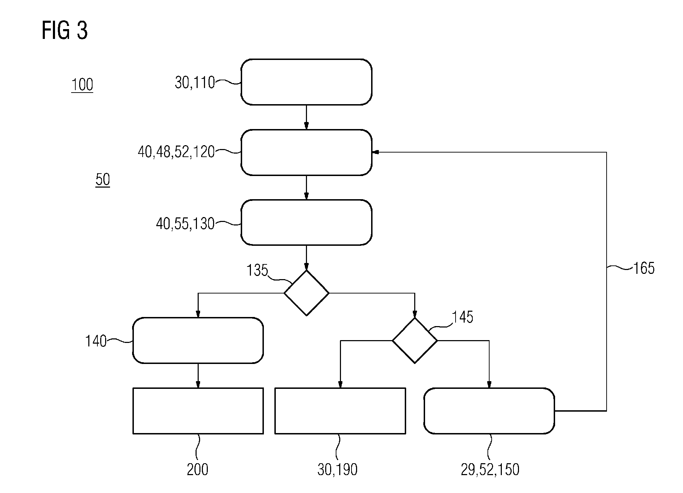

FIG 3 zeigt ein Ablaufdiagramm einer dritten Ausführungsform des erfindungsgemäßen Verfahrens 100. Die gezeigte Ausführungsform dient zur Durchführung einer Nebenzeitbewegung eines Werkzeugs 10 in einer Werkzeugmaschine 50. In einem Bereitstellungsschritt 110 wird eine erste Trajektorie 30 für die durchzuführende Nebenzeitbewegung 16, wie beispielsweise in FIG. 1, bereitgestellt. Dies erfolgt beispielsweise, indem eine von einem Benutzer manuell eingegebene erste Trajektorie 30 für einen Algorithmus 48 aus einem elektronischen Speicher geladen wird. In einem anschließenden Optimierungsschritt 120 wird mittels des Algorithmus 48 die bereitgestellte erste Trajektorie 30 weiterverarbeitet und eine auf mindestens einen Zielparameter optimierte zweite Trajektorie 40 ermittelt. Bei einem ersten Durchlauf des Optimierungsschrittes 120 wird ein Iterationszähler 52 initialisiert, der die Anzahl der Durchgänge des Optimierungsschrittes 120 repräsentiert. Die im Optimierungsschritt 120 ermittelte zweite Trajektorie 40 führt von der gleichen Startposition 12 zur gleichen Zielposition 14 wie die erste Trajektorie 30. In einem weiteren Verfahrensschritt, dem Kollisionsprüfschritt 130, wird erkannt, ob für die zweite Trajektorie 40 Kollisionsfreiheit bei der gesamten durchzuführenden Nebenzeitbewegung 16 vorliegt. In Abhängigkeit vom Prüfergebnis des Verfahrensschritts 130 verzweigt sich der weitere Verfahrensablauf. Dies ist in FIG 2 durch den Verzweigungspunkt ersten 135 abgebildet. Wenn für alle Punkte 55 auf der zweiten Trajektorie 40 Kollisionsfreiheit vorliegt, folgt ein Festsetzungsschritt 140. Im Festsetzungsschritt 140 wird die zweite Trajektorie 40 als nicht mehr veränderlich definiert und mindestens ein Befehl zur Steuerung des Werkzeugs 10 der Werkzeugmaschine 50 wird basierend auf der zweiten Trajektorie 40 ermittelt. Dabei umfasst die zweite Trajektorie 40 erfindungsgemäß mindestens einen Poylnomabschnitt. Der mindestens eine Befehl ist dazu geeignet, das Werkzeug 10 derart zu führen, dass die ermittelte zweite Trajektorie 40 abgefahren wird. Hierzu ist der mindestens eine Befehl an ein Antriebsmittel des Werkzeugs 10 gerichtet. Nach der Ermittlung des mindestens einen Befehls tritt das Verfahrensende 200 ein.

Wird im Kollisionsprüfschritt 130 hingegen eine Kollision für mindestens einen Punkt 55 der zweiten Trajektorie 40 ermittelt, wird geprüft, ob der Iterationszähler 52 einen Schwellenwert überschritten hat. In Abhängigkeit vom Prüfergebnis verzweigt sich der Verfahrensablauf weiter. Diese Verzweigung ist in FIG. 3 durch den zweiten Verzweigungspunkt 145 abgebildet. Wenn der Iterationszähler 52 den Schwellenwert bereits überschritten hat, folgt der Rücksetzungsschritt 190. Darin wird die wiederholte Durchführung des Optimierungsschrittes 120 abgebrochen. Ferner wird im Rücksetzungsschritt 190 festgelegt, dass für durchzuführende Nebenzeitbewegung 16 die erste Trajektorie 30 einzusetzen ist. Das erfindungsgemäße Verfahren 100 endet in diesem Fall mit dem Rücksetzungsschritt 190.

Wenn der Iterationszähler am Verzweigungspunkt 145 den Schwellenwert bislang nicht überschritten hat, folgt ein Modifikationsschritt 150. Darin wird ein modifiziertes Modell 29 vom Verfahrbereich 22 und seinen darin befindlichen Hindernissen 26 erstellt. Ferner wird der Iterationszähler 52 um Eins erhöht. Das modifizierte Modell 29 wird in einem anschließenden Rückführungsschritt 165 dem Algorithmus 48 für einen erneuten Durchlauf des Optimierungsschritts 120 bereitgestellt. Insgesamt verwirklicht das erfindungsgemäße Verfahren 100 das Prinzip eines Endlichen Automaten, bei dem ein Eintreten in eine Endlosschleife ausgeschlossen ist. Infolgedessen bietet das erfindungsgemäße Verfahren 100 ein hohes Maß an Zuverlässigkeit und vermeidet Stillstandszeiten von Werkzeugmaschinen 50.

## Patentansprüche

1. Verfahren (100) zur Steuerung einer Nebenzeitbewegung (16) eines Werkzeugs (10) von einer Startposition (12) zu einer Endposition (14) in einem Verfahrbereich (22) einer Werkzeugmaschine (50), umfassend die Schritte:
a) Bereitstellen einer kollisionsfreien ersten Trajektorie (30) für die Nebenzeitbewegung (16);
b) Ermitteln einer zweiten Trajektorie (40) mittels eines Algorithmus (48), die in mindestens einem wählbaren Zielparameter gegenüber der ersten Trajektorie (30) verbessert ist;
c) Prüfen der Kollisionsfreiheit der zweiten Trajektorie (40) und Ermitteln mindestens eines mit der zweiten Trajektorie (40) korrespondierenden Befehls, wenn für die zweite Trajektorie (40) Kollisionsfreiheit vorliegt;
wobei die zweite Trajektorie (40) im Schritt b) einen Polynomabschnitt (42) umfasst.

2. Verfahren (100) nach Anspruch 1, **dadurch gekennzeichnet, dass** die erste Trajektorie (30) eine Mehrzahl an geradlinigen Abschnitten (32) umfasst.

3. Verfahren (100) nach Anspruch 1 oder 2, **dadurch gekennzeichnet, dass** die Schritte a) bis c) wiederholt werden, wenn im Schritt c) für die zweite Trajektorie (40) keine Kollisionsfreiheit vorliegt, wobei in einem erneuten Durchlauf (46) von Schritt b) dem Algorithmus (48) ein modifiziertes Modell (29) des Verfahrbereichs (22) bereitgestellt wird.

4. Verfahren (100) nach Anspruch 3, **dadurch gekennzeichnet, dass** bei jeweils einem Durchlauf (44, 46) des Schritts b) ein Iterationszähler (52) um Eins erhöht wird und mindestens ein zur ersten Trajektorie (30) korrespondierender Befehl ermittelt wird, wenn im Schritt c) durch den Iterationszähler (52) ein Schwellenwert überschritten wird.

5. Verfahren (100) nach einem der Ansprüche 3 oder 4, **dadurch gekennzeichnet, dass** im Schritt c) eine Kollision des Werkzeugs (10) erkannt wird, wenn ein Punkt (55) der zweiten Trajektorie (40) innerhalb einer Hinderniskontur (28) liegt.

6. Verfahren (100) nach einem der Ansprüche 3 bis 5, **dadurch gekennzeichnet, dass** zur Erzeugung von Kollisionsfreiheit im modifizierten Modell (29) mindestens ein Parameter mindestens eines Zielkorridors (37, 53) verändert wird.

7. Verfahren (100) nach einem der Ansprüche 1 bis 6, **dadurch gekennzeichnet, dass** durch den Algorithmus (48) mindestens eine dynamische Eigenschaft der Werkzeugmaschine (50) in Schritt b) berücksichtigt wird.

8. Verfahren (100) nach einem der Ansprüche 1 bis 7, **dadurch gekennzeichnet, dass** der Befehl im Schritt c) vom Typ G0 oder G1 ist.

9. Verfahren (100) nach einem der Ansprüche 1 bis 8, **dadurch gekennzeichnet, dass** die erste Trajektorie (30) in Form von mindestens einem Befehl vom Typ G0 in einer Steuereinheit (90) der Werkzeugmaschine (50) gespeichert ist.

10. Verfahren (100) nach einem der Ansprüche 1 bis 9, **dadurch gekennzeichnet, dass** der mindestens eine wählbare Zielparameter ein Zeitbedarf, ein Energiebedarf, eine Verlustleistung, oder ein Verschleiß des Werkzeugs (10) oder eines Antriebsmittels bei der Nebenzeitbewegung (16) ist.

11. Programm (80) zum Betrieb einer Steuereinheit (90) einer Werkzeugmaschine (50), **dadurch gekennzeichnet, dass** das Programm (80) dazu ausgebildet ist, mindestens eines der Verfahren (100) nach den Ansprüchen 1 bis 10 durchzuführen.

12. Steuereinheit (90) für eine Werkzeugmaschine (50), umfassend einen Speicher und einen Prozessor zur Speicherung und Durchführung eines Programms (80) nach Anspruch 11.
